# EUROPEAN PATENT APPLICATION

(11) **EP 4 412 220 A1**
(43) Date of publication of application: **07.08.2024**
(21) Application number: 21958997.5
(22) Date of filing: 30.09.2021
(51) Int. Cl.: H04N 21/2187, H04N 19/61

(54) **ENCODING METHOD, DECODING METHOD, DECODER, ENCODER AND COMPUTER-READABLE STORAGE MEDIUM**

(71) Applicant: Zhejiang University, Hangzhou, Zhejiang 310058 (CN); GUANGDONG OPPO MOBILE TELECOMMUNICATIONS CORP., LTD., Dongguan, Guangdong 523860 (CN)
(72) Inventor: YU, Lu, Dongguan, Guangdong 523860 (CN); PAN, Yaqing, Dongguan, Guangdong 523860 (CN); ZHU, Bingjie, Dongguan, Guangdong 523860 (CN); DAI, Zhenyu, Dongguan, Guangdong 523860 (CN)
(74) Representative: Penza, Giancarlo
(86) International application number: PCT/CN2021/122467
(87) International publication number: WO 2023/050431

(57) **Abstract**

Provided in the embodiments of the present application are an encoding method, a decoding method, a decoder, an encoder and a computer-readable storage medium. The decoding method may comprise: parsing a code stream, and acquiring a frame type identifier of a decoding frame; if the frame type identifier indicates that the decoding frame is a key frame, decoding the key frame by means of a decoding network, so as to obtain decoding information; and using a task network to perform task analysis on the decoding information, so as to obtain a task analysis result.

## Description

### TECHNICAL FIELD

Embodiments of the present disclosure relate to the technical field of video encoding and decoding, in particular to a method for encoding, a method for decoding, a decoder, an encoder, and a computer storage medium.

### BACKGROUND

Videos, as a dominant media form in Internet traffic, may lead to a huge amount of data transmission if they are not compressed. The conventional video encoding and decoding standards such as H.264/AVC, H.265/HEVC, H.266/VVC aim to compress the videos. However, the object oriented by these standards is human vision, and a target of the compression is to keep the image quality at a pixel level and enable the image has a good visual quality. An issue of how to improve the compression efficiency of videos needs to be further discussed.

### SUMMARY

Embodiments of the present disclosure provide a method for encoding, a method for decoding, a decoder, an encoder, and a computer-readable storage medium, which can process the video encoding and decoding processes differentially and improve encoding and decoding efficiency.

The technical solution of embodiments of the present disclosure is provided as follows.

There is provided a method for decoding in an embodiment of the present disclosure, which includes the following operations.

A bitstream is parsed and a frame type identifier of a frame to be decoded is obtained.

When the frame type identifier indicates that the frame to be decoded is a key frame, the key frame is decoded through a decoding network to obtain decoded information.

Task analysis is performed on the decoded information by using a task network, to obtain a task analysis result.

There is provided a method for encoding in an embodiment of the present disclosure, which includes the following operations.

A video sequence is processed to determine one or more key frames and one or more non-key frames.

When a frame to be encoded is a key frame, the key frame is encoded through an encoding network to obtain a key frame bitstream.

When the frame to be encoded is a non-key frame, inter-frame encoding is performed on the non-key frame based on a reference key frame, to obtain a non-key frame bitstream. The reference key frame is an encoded key frame before encoding the non-key frame.

There is provided a decoder in an embodiment of the present disclosure, which includes a parsing portion, a decoding portion and a task analysis portion.

The parsing portion is configured to parse a bitstream and obtain a frame type identifier of a frame to be decoded.

The decoding portion is configured to: when the frame type identifier indicates that the frame to be decoded is a key frame, decode the key frame through a decoding network to obtain decoded information.

The task analysis portion is configured to perform task analysis on the decoded information by using a task network, to obtain a task analysis result.

There is provided an encoder in an embodiment of the present disclosure, which includes a determination portion and an encoding portion.

The determination portion is configured to process a video sequence to determine one or more key frames and one or more non-key frames.

The encoding portion is configured to: when a frame to be encoded is a key frame, encode the key frame through an encoding network to obtain a key frame bitstream; and when the frame to be encoded is a non-key frame, perform inter-frame encoding on the non-key frame based on a reference key frame, to obtain a non-key frame bitstream. The reference key frame is an encoded key frame before encoding the non-key frame.

There is provided a decoder in an embodiment of the present disclosure, which includes a first memory and a first processor.

The first memory is for storing executable decoding instructions.

The first processor is configured to perform the decoding method of the decoder when executing the executable decoding instructions stored in the first memory.

There is provided an encoder in an embodiment of the present disclosure, which includes a second memory and a second processor.

The second memory is for storing executable encoding instructions.

The second processor is configured to perform the encoding method of the encoder when executing the executable decoding instructions stored in the second memory.

There is provided a computer-readable storage medium in an embodiment of the present disclosure. The computer-readable storage medium has stored thereon executable decoding instructions which, when being executed by a first processor, cause the first processor to perform the decoding method of the decoder; or has stored thereon executable encoding instructions which, when being executed by a second processor, cause the second processor to perform the encoding method of the encoder.

The embodiments of the disclosure provide a method for encoding, a method for decoding, a decoder, an encoder and a computer-readable storage medium. Only the key frame is decoded by an end-to-end approach to obtain the decoded information in the decoding process. The decoded information may be directly used in a process of performing an intelligent task, and a task analysis function can be realized by adopting the key frame instead of performing the intelligent task after all of the bitstreams are parsed. Therefore, decoding efficiency of the key frame can be improved while a processing speed of the intelligent task can be improved.

### BRIEF DESCRIPTION OF THE DRAWINGS

FIG. 1 is a first encoding and decoding method realized by a related technology in an embodiment of the present disclosure.
FIG. 2 is a second encoding and decoding method realized by a related technology in an embodiment of the present disclosure.
FIG. 3 is a third encoding and decoding method realized by a related technology in an embodiment of the present disclosure.
FIG. 4 is a flowchart of a method for decoding provided in an embodiment of the present disclosure.
FIG. 5A is a schematic structural diagram of a Lee network model provided in an embodiment of the present disclosure.
FIG. 5B is a schematic structural diagram of a Duan network model provided in an embodiment of the present disclosure.
FIG. 6A is a schematic structural diagram of a yolo_v3 network model provided in an embodiment of the present disclosure.
FIG. 6B is a schematic structural diagram of another yolo_v3 network model provided in an embodiment of the present disclosure.
FIG. 6C is a schematic structural diagram of a ResNet-FPN network model provided in an embodiment of the present disclosure.
FIG. 6D is a schematic structural diagram of a Mask-RCNN network model provided in an embodiment of the present disclosure.
FIG. 7 is a schematic block diagram of composition of a decoding system provided in an embodiment of the present disclosure.
FIG. 8 is a flowchart of a method for encoding provided in an embodiment of the present disclosure.
FIG. 9 is a schematic block diagram of composition of an encoding system provided in an embodiment of the present disclosure.
FIG. 10 is a schematic diagram of an exemplary encoding and decoding process provided in an embodiment of the present disclosure.
FIG. 11 is a first schematic diagram of an exemplary encoding and decoding process for a key frame provided in an embodiment of the present disclosure.
FIG. 12 is a second schematic diagram of an exemplary encoding and decoding process for a key frame provided in an embodiment of the present disclosure.
FIG. 13 is a first schematic structural diagram of a decoder provided in an embodiment of the present disclosure.
FIG. 14 is a second schematic structural diagram of a decoder provided in an embodiment of the present disclosure.
FIG. 15 is a first schematic structural diagram of an encoder provided in an embodiment of the present disclosure.
FIG. 16 is a second schematic structural diagram of an encoder provided in an embodiment of the present disclosure.

### DETAILED DESCRIPTION

In order to make the purpose, technical solution and advantages of the disclosure more clear, the disclosure will be further described in detail below in combination with the accompanying figures. The described embodiments should not be regarded as limitation on the disclosure. All other embodiments obtained by a person of ordinary skill in the art based on the embodiments of the disclosure without paying inventive efforts shall fall within the scope of protection of the disclosure.

Unless otherwise defined, all technical and scientific terms used herein have the same meanings as are commonly understood by those skilled in the art of the present disclosure. Terms used in the disclosure are for the purpose of describing embodiments of the disclosure only and are not intended to limit the disclosure.

In the embodiments of the disclosure, development of an end-to-end image encoding and decoding network is relatively mature, and the difference of different technical schemes lies in the different structures of encoders and decoders, or the different probability estimation models. Rate-distortion performance of the latest end-to-end image coding technology has approached and even surpassed the performance of intra-frame coding in the latest Versatile Video Coding (VVC) Test Model (VTM) codec of the VVC international standard. Compared with the history of the conventional encoding and decoding, the end-to-end image encoding and decoding technology reaches the performance of conventional encoding and decoding technology in a very short time, which is of great significance to encoding and decoding technology.

In recent years, with the development of deep learning, image coding based on the deep learning has become a study hot spot. The pixel-level image quality is considered as a loss function and is optimized through a neural network structure. Finally, a code word distribution is estimated approximately by using a probability estimation model, so as to achieve the target of optimizing rate-distortion performance. This technology is called end-to-end image coding. In recent years, machines have become the object for processing a large number of video traffic, and the demand for machine task oriented video compression is increasing.

At present, encoding and decoding processing for the image and video may include human vision oriented video compression and machine task oriented video compression. The former one pays more attention to pixel-level image quality, while the latter one focusses more on semantic quality. The conventional encoding and decoding method is used in the human vision oriented video compression. Machine task oriented video compression is an encoding and decoding method realized by an end-to-end image compression network.

In such way, internationally, Ad-Hoc of the Motion Picture Expert Group (MPEG), an international standards organization, created an organization called "Machine Video Coding (VCM)". The development of the conventional video encoding and decoding has tended to a certain saturation stage, and it is limited to the technology that can be optimized, the aspect that can be developed and the performance that can be improved. Therefore, it is difficult to have a breakthrough development. However, although the end-to-end image compression network has a certain breakthrough in images, it does not surpass the performance of VVC in video encoding and decoding, and still faces great challenges. In addition, complexity of deep learning based end-to-end video encoding and decoding is greater than the conventional video encoding and decoding technology, and suffers some encoding and decoding efficiency problems.

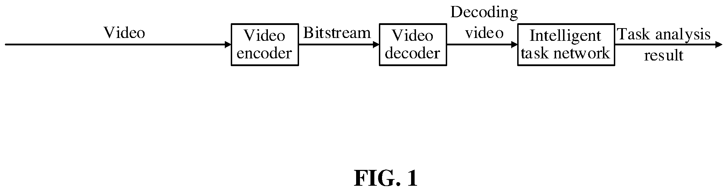

Therefore, the VCM proposes three approaches. The first approach, as illustrated in FIG. 1, directly applies video codec to encode and decode a video, and the decoded video is directly sent to an intelligent task network for analysis, to obtain a task analysis result. There is no restriction on codec in the video architecture, which may be either a deep learning based end-to-end encoding and decoding network or a conventional codec.

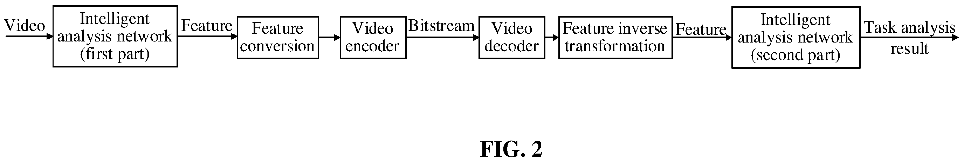

The second approach, as illustrated in FIG. 2, splits the intelligent task analysis into two parts. The first part is to extract features from the video, which usually exists in an edge device, and the other part is to perform corresponding machine intelligent analysis task, usually existed in a cloud server. In the middle part, the features are converted and sent to the video codec for encoding and decoding, and after the inverse transformation of the features, the features are finally sent to the second part of the intelligent task to obtain the task analysis result. Similarly, the video codec herein is not limited.

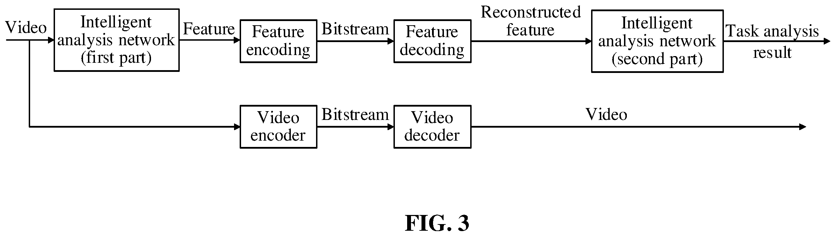

The third approach, as illustrated in FIG. 3, is a human-machine hybrid approach, which may be both machine and human vision oriented. This approach divides the intelligent task into two parts like the second approach. The original video and the features extracted from the video by using the first part of the intelligent task network are taken as inputs and pass through two branches respectively. The upper part is feature encoding and decoding, and the final reconstructed features are taken as input of the subsequent second part of the intelligent task network, to obtain the task analysis result. The video decoder in bottom branch utilizes the generated bitstream and reconstructed features from the top branch to reconstruct the video/image for human consumption.

However, not all frames of the video need to be analyzed for many intelligent tasks, and similar benefits can be achieved by extracting one or more key frames for analysis. For example, for a target detection task, if an object in the key frame is included in the subsequent few non-key frames, then these non-key frames do not need to be analyzed.

On such basis, the embodiments of the disclosure provide a hybrid video encoding and decoding method which is oriented to machine intelligence. The method may also be compatible with the human vision oriented field. The embodiments of the disclosure are realized by combining the end-to-end image compression network with the conventional video encoding and decoding system. A target video (video sequence) is divided into a plurality of image sets, and the image set is divided into one or more key frames and one or more non-key frames. For the key frame of the video containing more new information, an intelligent method which is more efficient is adopted to independently encode and decode the key frame. Other frames are still encoded and decoded by an inter-frame method. Before intelligent analysis, only the key frame needs to be detected from the bitstream for decoding and analysis, thus complex inter-frame decoding is no longer needed, which can improve the speed of intelligent analysis.

The technical solution of the present disclosure is further described in detail with reference to the drawings and embodiments.

An embodiment of the present disclosure provides a method for decoding, the method applied to a video decoding device, i.e., a decoder. Functions realized by the method may be performed by calling program codes by a first processor in the video decoding device. In addition, the program codes may be stored in a computer storage medium. Accordingly, the video decoding device includes at least the first processor and a first memory.

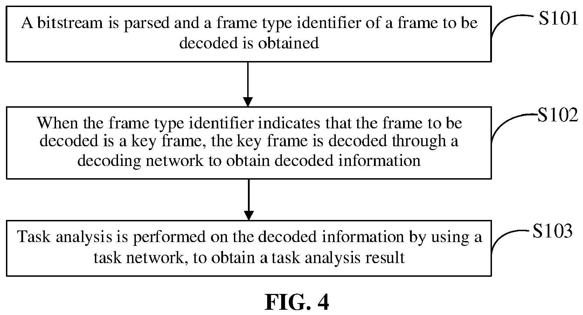

FIG. 4 is a schematic flowchart of a method for decoding provided in an embodiment of the present disclosure. As illustrated in FIG. 4, the method includes the following operations.

At S101, a bitstream is parsed and a frame type identifier of a frame to be decoded is obtained.

At S 102, when the frame type identifier indicates that the frame to be decoded is a key frame, the key frame is decoded through a decoding network to obtain decoded information.

At S103, task analysis is performed on the decoded information by using a task network, to obtain a task analysis result.

In an embodiment of the present disclosure, in a scene of machine intelligence oriented hybrid video encoding and decoding, the end-to-end encoding and decoding network and the conventional encoding and decoding are combined to jointly realize the encoding and decoding for the video.

In an embodiment of the present disclosure, the decoder may first determine a decoding mode in a unit of frame, and determine how to decode the frame according to different frame types.

In an embodiment of the present disclosure, the decoder parses the bitstream. Because the frame type identifier is transmitted in the bitstream according to the frame type during encoding, the decoder may parse the frame type identifier of the frame to be decoded at present from the bitstream.

It should be noted that in an embodiment of the present disclosure, the frame types may include a key frame and a non-key frame. The key frame and non-key frame may be types different from the conventional key frame.

In some embodiments of the present disclosure, the key frame may be a video frame having the highest correlation or tightness with the task analysis of the video sequence through the intelligent task network, and the remaining video frames are non-key frames.

In some embodiments of the present disclosure, the key frame may also be a key frame determined independently of the task analysis, which is not limited in the embodiments of the present disclosure.

In an embodiment of the present disclosure, the frame type identifier with the frame type being the key frame may be represented by I* frame, and identifies of other frame types with the frame types being non-key frames are represented by identifies except for the I* frame, and the embodiments of the present disclosure do not limit the frame type representation form of the key frame.

It should be noted that, in an embodiment of the present disclosure, the key frame or the non-key frame is represented by a value of a syntax element describing a value of the frame type identifier in the bitstream.

In an embodiment of the present disclosure, when the frame type identifier parsed by the decoder is a key frame, the decoder may decode the current frame to be decoded, which is the key frame, through the end-to-end decoding network to obtain decoded information.

It should be noted that the decoding network may be an end-to-end image compression and decoding network, which may realize entropy decoding and reconstruction by a convolution layer of a neural network, to obtain the decoded information. A decoded feature (a feature of the key frame) corresponding to the frame to be decoded may be obtained after entropy decoding. After the decoded feature is processed by a convolution layer of a neural network, a decoded reconstructed frame (i.e., a reconstructed frame of the key frame) may be obtained.

In an embodiment of the present disclosure, because machine learning or big data is adopted to realize task analysis, it is also necessary to extract features and then analyze the features when the intelligent task processing is performed. Therefore, in an embodiment of the present disclosure, the decoder may directly input the decoded feature which is output intermediately to the task network, and the decoded feature may be directly analyzed by the task network, thereby realizing the task analysis and obtaining the task analysis result. In such way, the decoder may perform partial decoding on the key frame (i.e., to obtaining the decoded feature by decoding) and start the intelligent analysis without recovering the decoded reconstructed frame. Therefore, the operating procedures during the task analysis can be reduced and the speed and efficiency of the task analysis can be improved. Because the key frame is a frame having the highest degree of tightness with the task, accuracy of the task analysis result can be improved if the decoded feature obtained from decoding the key frame is used for task analysis.

In some embodiments of the present disclosure, the decoder may also input the decoded reconstructed frame obtained by decoding to the task network, to realize the task analysis process and obtain the task analysis result, which is not limited in the embodiments of the present disclosure.

In an embodiment of the present disclosure, the intelligent task processing may be machine learning processing such as a target detection task, a target classification task, etc., which is not limited in the embodiments of the present disclosure. Taking the target detection task as an example, in a scene that pedestrians need to be detected from an image, the task network is a target detection network, and the decoded reconstructed frame may be detected and analyzed by using the target detection network, to obtain a pedestrian detection result (i.e., the task analysis result).

It should be noted that the decoding network may be formed by a neural network. The task network may also be a machine learning based intelligent network, for example, a detection network or a classification network based on a neural network and the like, or other deep learning networks, which is not limited in the embodiments of the present disclosure.

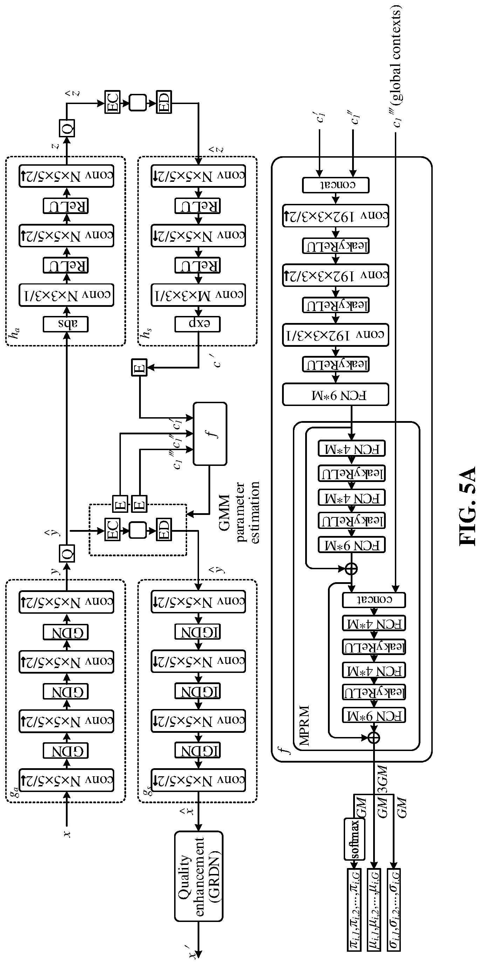

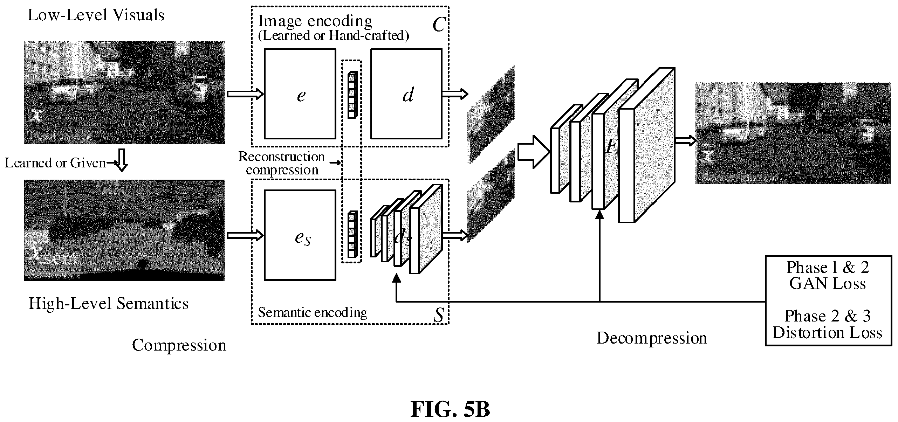

The task network and the end-to-end image compression encoding and decoding network provided by the embodiments of the disclosure may also be replaced by other common network structures. For example, in the field of end-to-end image encoding and decoding, Lee network and Duan network may be used for specific implementation. Lee network adopts a transfer learning method to improve the quality of images reconstructed by the network. Duan network adopts high-level semantic images to enhance low-level visual features, and it is verified that this method can effectively improve the rate-precision-distortion performance of image compression. Herein, a composition structure of the Lee network model is illustrated in FIG. 5A, and the composition structure of the Duan network model is illustrated in FIG. 5B.

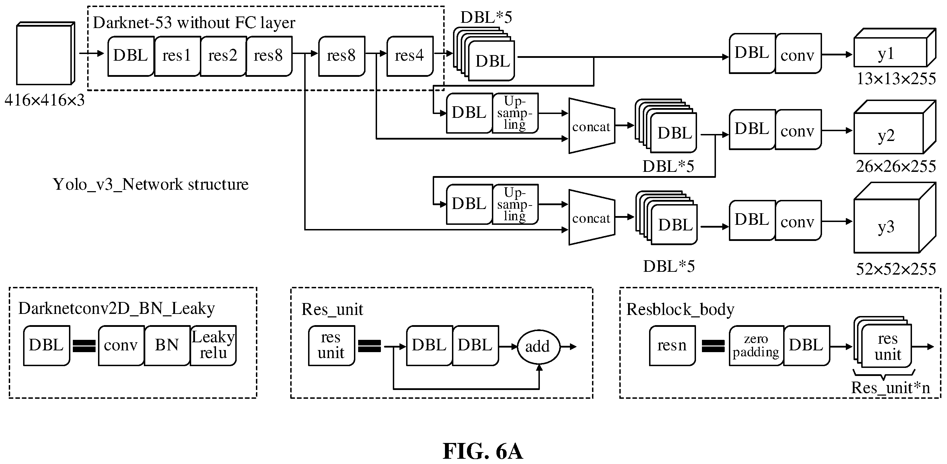

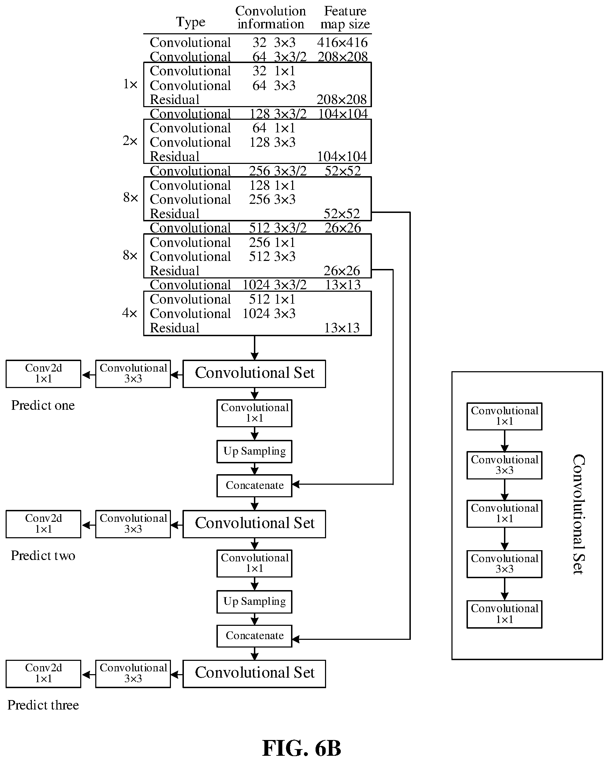

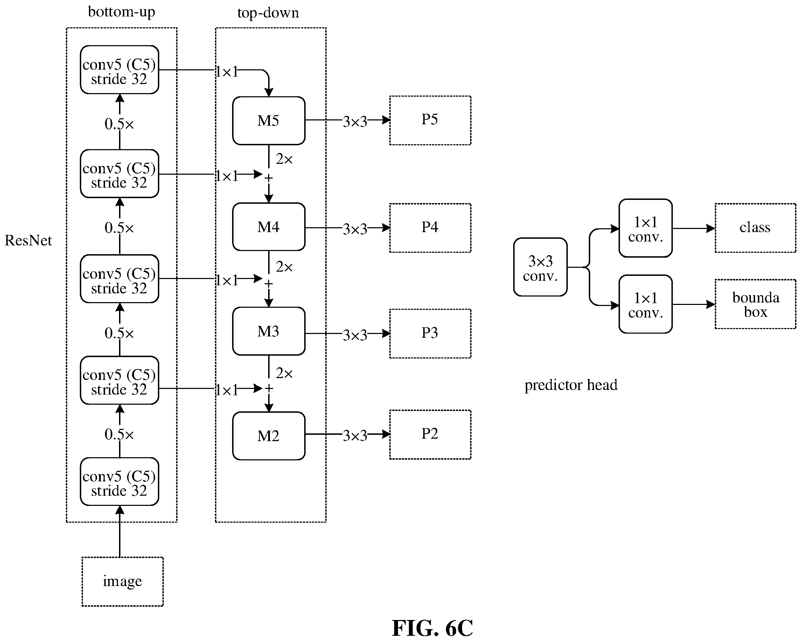

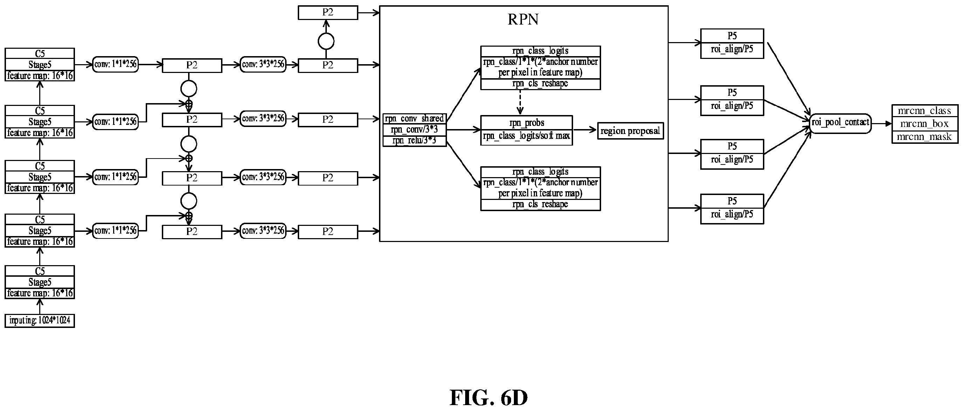

Correspondingly, in the field of task network, a target recognition network yolo_v3 may be used for specific implementation, and the network model composition structure is illustrated in FIGS. 6A and 6B. In addition, the target detection network ResNet-FPN and the instance partition network Mask-RCNN may also be used. The composition structure of the target detection network model is illustrated in FIG. 6C and the composition structure of the instance partition network model is illustrated in FIG. 6D.

It should be understood that only the key frame is decoded by the end-to-end approach to obtain decoded information in the decoding process. The decoded information may be directly used in the process of performing the intelligent task, and the task analysis function can be realized by adopting the key frame instead of performing the intelligent task after all of the bitstreams are parsed. Therefore, the decoding efficiency of the key frame can be improved while improving the processing speed of the intelligent task.

In some embodiments of the present disclosure, information associated with a network parameter transmitted by the encoder when encoding may be obtained by the decoder when parsing the bitstream, and the decoder, based on the information associated with the network parameter, can keep consistent with the network parameter of the encoding network when encoding.

It should be noted that the decoder may determine the decoding network to be used for decoding based on the information associated with the network parameter.

In some embodiments of the present disclosure, the information associated with the network parameter may include index information of the network parameter or the network parameter, etc. The decoder may directly use the network parameter to obtain the decoding network in an initial decoding network, or determine, according to the index information of the network parameter, the network corresponding to the index information of the network parameter from a preset network mapping relationship to be the decoding network, which is not limited in the embodiments of the present disclosure.

In some embodiments of the present disclosure, when the frame type identifier indicates that the frame to be decoded is a non-key frame, the non-key frame is decoded by using conventional decoding to obtain a reconstructed non-key frame. The conventional decoding may be inter prediction, intra prediction, etc., which is not limited in the embodiments of the present disclosure.

In some embodiments of the present disclosure, in case that the conventional decoding is the inter prediction, when the frame type identifier indicates that the frame to be decoded is a non-key frame, a reference reconstructed key frame corresponding to the frame to be decoded is obtained. The inter prediction is performed on the non-key frame based on the reference reconstructed key frame, to obtain a reconstructed non-key frame. The reference reconstructed key frame is a decoded reconstructed frame before decoding the non-key frame.

It can be understood that the decoder adopts different decoding methods for the key frame and the non-key frame, respectively, according to different usage requirements. The key frame is decoded by the end-to-end image decoding, which can improve the decoding efficiency of the key frame, while the non-key frame is decoded by the conventional decoding, which can reduce the complexity of decoding and takes into account both the advantages of end-to-end image decoding and conventional decoding.

In an embodiment of the disclosure, the decoder may also obtain frame index information of the reference key frame of the non-key frame when parsing the bitstream. The reference reconstructed key frame is determined from the decoded reconstructed frames based on the frame index information.

It should be noted that the decoder adopts the decoding method of a conventional decoding system when the decoder decodes a frame to be decoded which is a non-key frame based on the frame type identifier. For example, the decoded reconstructed frame of key frame corresponding to the non-key frame is used as a reference frame by using the inter prediction, so that the decoding process for the non-key frame can be realized, and the reconstructed non-key frame can be obtained.

In an embodiment of the present disclosure, the encoder may divide the video sequence into a plurality of image sets, and determine one or more key frames and one or more non-key frames in each image set when encoding the video sequence. In this case, the decoder needs to use the decoded key frame in the same set as the non-key frame to be decoded to decode the non-key frame in the process of decoding the non-key frame.

It should be noted that the reference reconstructed key frame of the non-key frame corresponds to the reference key frame for encoding the non-key frame, and the reference reconstructed key frame is a result of decoding and reconstructing the reference key frame. The decoder may obtain the frame index information of the reference key frame from the bitstream, so that the decoder may locate the reference reconstructed key frame corresponding to the reference key frame from the decoded reconstructed frames according to the frame index information.

In an embodiment of the present disclosure, the decoded reconstructed frame, especially the reconstructed frame of the key frame, may exist in a reference frame buffer area, so that the decoder may find the corresponding reference reconstructed key frame from the reference frame buffer area according to the frame index information when decoding the non-key frame.

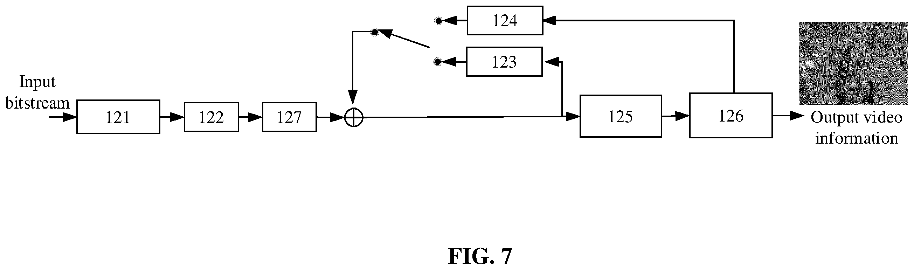

In some embodiments of the present disclosure, the decoder performs the inter prediction for non-key frames by using a conventional decoding system to achieve decoding. A framework of the decoding system is illustrated in FIG. 7. The decoding system includes a decoding unit 121, an inverse transform unit 127, an inverse quantization unit 122, an intra prediction unit 123, a motion compensation unit 124, a loop filter unit 125 and a decoded image buffer unit 126.

A bitstream of a video signal is output after an input video signal is encoded by an encoding system. The bitstream is input into a decoding system 12, which first passes through a decoding unit 121 to obtain a decoded transform coefficient. The transform coefficient is processed by the inverse transform unit 127 and the inverse quantization unit 122 to generate a residual block in pixel domain. The intra prediction unit 123 may be configured to generate prediction data of the current video decoded block based on the determined intra prediction direction and data obtained from the previously decoded block of the current frame or picture. The motion compensation unit 124 determines predictive information for the video decoded block by parsing a motion vector and other associated syntax elements, and generates a predictive block of video decoded block being decoded by using the predictive information. The decoded video block is obtained by summing the residual block from the inverse transform unit 127 and the inverse quantization unit 122 with the corresponding predictive block generated by the intra prediction unit 123 or the motion compensation unit 124. The decoded video signal passes through the loop filter unit 125 to remove the blocking effect artifacts and improve the video quality. Then the decoded video block is stored in the decoded image buffer unit 126. The decoded image buffer unit 126 stores a reference image for subsequent intra prediction or motion compensation, and is also configured to output the video signal, to obtain a restored original video signal.

In an embodiment of the present disclosure, the decoder is implemented by using the inter prediction unit of the decoding system, i.e., a motion compensation unit 124.

It should be understood that, the decoder may decode the key frame by using the end-to-end decoding network, and decode the non-key frame by using the conventional decoding means, so as to facilitate the intelligent analysis after the key frame is decoded. Specifically, the decoder may perform partial decoding on the key frame and start the intelligent analysis without recovering the image. Therefore, the processing procedures can be reduced and the speed of obtaining the analysis result and the precision of the analysis can be improved.

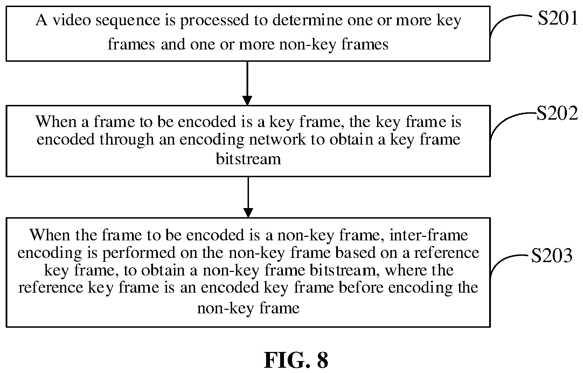

In some embodiments of the disclosure, as illustrated in FIG. 8, there is provided a method for encoding in an embodiment of the present disclosure, which includes the following operations.

At S201, a video sequence is processed to determine one or more key frames and one or more non-key frames.

At S202, when a frame to be encoded is a key frame, the key frame is encoded through an encoding network to obtain a key frame bitstream.

At S203, when the frame to be encoded is a non-key frame, inter-frame encoding is performed on the non-key frame based on a reference key frame, to obtain a non-key frame bitstream. The reference key frame is an encoded key frame before encoding the non-key frame.

The encoder may divide the video sequence into different types, to determine the key frame and non-key frame when encoding the video sequence. The key frame may be multiple frames, which is not limited in the embodiments of the present disclosure.

In an embodiment of the present disclosure, when the frame to be encoded is a key frame, the key frame is encoded by the decoder through the encoding network to obtain the key frame bitstream. When the frame to be encoded is a non-key frame, inter-frame encoding is performed on the non-key frame by the decoder based on a reference key frame, to obtain a non-key frame bitstream. The reference key frame is an encoded key frame before encoding the non-key frame. Both the key frame bitstream and the non-key frame bitstream are bitstreams transmitted to the decoder.

In an embodiment of the disclosure, after the decoder determines the key frame and the non-key frame, the decoder marks the key frame and/or the non-key frame, determines the frame type identifier, and signals the frame type identifier into the key frame bitstream and/or the non-key frame bitstream.

It should be noted that the decoder may mark the key frame and the non-key frame. The frame type identifier with the frame type being the key frame may be represented by I* frame, and identifies of other frame types with the frame types being non-key frames are represented by identifies except for the I* frame, and the embodiments of the present disclosure do not limit the frame type representation form of the key frame. In some of the embodiments of the present disclosure, a value of the frame type identifier is described as the key frame or the non-key frame by a value of a syntax element in the key frame bitstream and/or the non-key frame bitstream. The key frame and non-key frame may be types different from the conventional key frame. The syntax element herein is user-defined, which is different from existing syntax elements.

In some embodiments of the present disclosure, the key frame may be a video frame having the highest correlation or tightness with the task analysis of the video sequence through the intelligent task network (i.e., the task network), and the remaining video frames are non-key frames.

In some embodiments of the present disclosure, the key frame may also be a key frame determined independently of the task analysis, which is not limited in the embodiments of the present disclosure.

Illustratively, the video sequence to be encoded is divided into a plurality of image sets, each image set may be divided into one or more key frames and one or more non-key frames. The key frame may be selected and determined according to some methods, such as scene switching, etc.

In some embodiments of the present disclosure, the encoder may determine, based on a characteristic of task analysis, at least one frame in the video sequence that best matches a task to be a key frame and one or more frames in the video sequence other than the key frame to be the non-key frames.

The at least one frame that best matches the task includes: at least one frame in which a task scene is switched; and at least one representative frame in the task scene.

Embodiments of the present disclosure are not limited to other scene modes for determining the key frame and non-key frame.

It should be noted that, after the decoder determines the key frame and the non-key frame, the decoder marks the key frame and the non-key frame, determines the frame type identifier, and signals the frame type identifier into the key frame bitstream. The decoder may also mark the non-key frame, determine the frame type identifier, and signal the frame type identifier into the non-key frame bitstream. The encoder may also mark the key frame and the non-key frame respectively, determine the identities of the frame types, and signal the identities of the frame types into the corresponding key frame bitstream and the non-key frame bitstream, respectively. The embodiments of the present disclosure are not limited thereto.

When the encoder encodes the current frame, the encoder may mark the key frame first for distinguishing, so that when the encoder encodes the frame to be encoded, if it is determined that the frame to be encoded is the key frame, the encoder adopts the end-to-end image compression encoding network (i.e., the encoding network) to encode the key frame. When the frame to be encoded is determined to be the non-key frame, inter-frame encoding is performed on the non-key frame based on a reference key frame, to obtain a non-key frame bitstream. The reference key frame is an encoded key frame before encoding the non-key frame.

It is should be noted that the key frame bitstream includes at least one of a feature bitstream or a probability estimation bitstream. The encoding network may be an end-to-end image compression encoding network. The encoding network may implement feature extraction, quantization and entropy coding of a convolution layer of a neural network, to obtain the feature bitstream. The encoding network may also implement feature extraction of a convolution layer of a neural network, and implement probability estimation processing through a probability estimation model, to obtain the probability estimation bitstream.

That is to say, the encoder may perform the feature extraction, quantization and entropy coding on the key frame through the encoding network, to obtain the feature bitstream. The encoder may also perform the feature extraction and probability estimation on the key frame through the encoding network, to obtain the probability estimation bitstream. Alternatively, the above two methods for encoding may also be performed simultaneously, which is not limited in the embodiments of the present disclosure.

It should be noted that the encoding network may be formed by a neural network, or other deep learning networks, which is not limited in the embodiments of the present disclosure.

In some embodiments of the present disclosure, the encoder may determine a network parameter of the encoding network based on a preset bit rate, to determine the encoding network. The encoder may also signal the network parameter or the index information of the network parameter corresponding to the network parameter into the bitstream. For example, an end-to-end image compression network parameter (or index information thereof) may be added to the frame Picture Parameter Set (PPS) bitstream of the current frame to be encoded.

It should be noted that the network, the network parameter that should be provided may be determined according to the desired preset bit rate, and further the network corresponding to the network parameter may be determined to be the encoding network.

In some embodiments of the present disclosure, there is a mapping relationship between the network and parameters, and index information of a network parameter is used for indicating the network parameter. Therefore, during transmission, the encoder may directly transmit the network parameter to the decoder for decoding, or it may transmit the index information of the network parameter to the decoder, so that the required decoding network can be found since the decoder stores the mapping relationship between the network and the parameters. The embodiments of the present disclosure are not limited thereto.

Illustratively, the encoder determines an end-to-end compression encoding network parameter (or index information) based on requirement of a given bit rate (Quantization Parameter (QP)), and marks the used end-to-end compression network parameter (index information) in the bitstream. The frame type for the marked frame which is encoded by using an end-to-end compression encoding network is represented as an I* frame in the bitstream. The frame type representation of the non-key frame is the frame type representation specified in the conventional video encoder, such as an I frame, P frame, or B frame.

In some embodiments of the present disclosure, the encoder may also divide the video sequence into a plurality of sets of image frames. One or more key frames and one or more non-key frames are determined from each of the plurality of sets of image frames.

It should be noted that the encoder implements the inter prediction for the non-key frame by using the conventional encoding system, and uses the encoded key frame (reference key frame) before encoding the non-key frame as the reference frame for inter prediction.

Illustratively, the reference key frame may be the encoded key frame before encoding the non-key frame in each set of image frames.

In an embodiment of the present disclosure, the encoder needs to signal the frame index information of the reference key frame into the non-key frame bitstream and transmit it to the decoder, for the decoder to perform inter prediction when decoding the non-key frame.

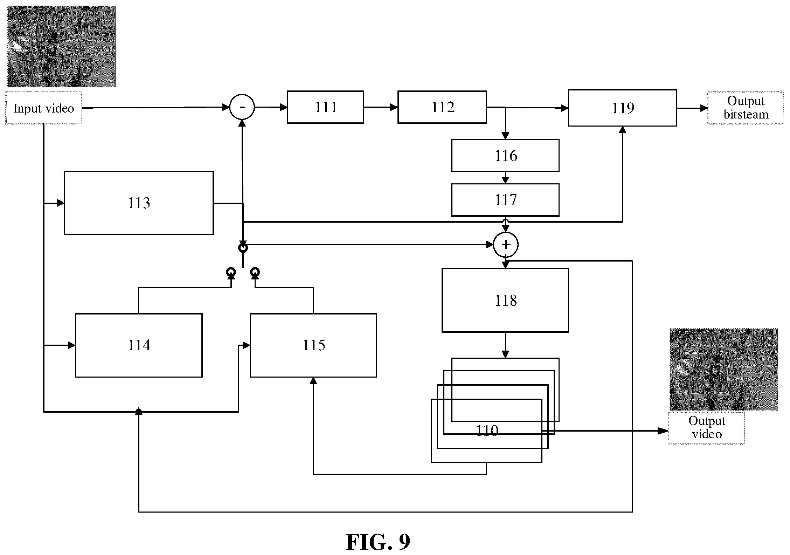

It should be noted that the decoder performs the inter prediction for the non-key frame by using the conventional encoding system to realize encoding. A framework of the encoding system is illustrated in FIG. 9. The encoding system includes a transform unit 111, a quantization unit 112, a mode selection and encoding control logic unit 113, an intra prediction unit 114, an inter prediction unit 115 (including motion compensation and motion estimation), an inverse quantization unit 116, an inverse transform unit 117, a loop filter unit 118, an encoding unit 119, and a decoded image buffer unit 110.

An input original video signal is divided by a Coding Tree Unit (CTU) to obtain a video block to be reconstructed, and an encoding mode is determined by the mode selection and encoding control logic unit 113. Then, the video block to be reconstructed is transformed by the transform unit 111 and the quantization unit 112 based on residual pixel information obtained by intra prediction or inter prediction, the transform includes transforming the residual information from a pixel domain to a transform domain, and quantizing the obtained transform coefficients, to further reduce the bit rate. The intra prediction unit 114 performs intra prediction on the video block to be reconstructed, the intra prediction unit 114 is configured to determine an optimal intra prediction mode (i.e., a target prediction mode) of the video block to be reconstructed. The inter prediction unit 115 is configured to perform inter predictive coding of the received video block to be reconstructed with respect to one or more blocks of one or more reference frames, to provide temporal prediction information. Motion estimation is a process for generating a motion vector for estimating motion of the video block to be reconstructed, and then, motion compensation is performed based on the motion vector determined by the motion estimation. After the inter prediction mode is determined, the inter prediction unit 115 is further configured to supply selected inter prediction data to the encoding unit 119, and also to send calculated and determined motion vector data to the encoding unit 119. In addition, the inverse quantization unit 116 and the inverse transform unit 117 are configured to the reconstruct the video block to be reconstructed, a residual block is reconstructed in the pixel domain, which removes the blocking effect artifacts by the loop filter unit 118. Then, the reconstructed residual block is added to a predictive block in a frame of the decoded image buffer unit 110, to generate the reconstructed video block. The encoding unit 119 is configured to encode various encoding parameters and quantized transform coefficients.

In an embodiment of the present disclosure, the encoder is implemented by using the inter prediction unit 115 of an encoding system.

It can be understood that the encoder may encode the key frame by using the end-to-end encoding network and encode the non-key frame by using the conventional encoding means. Compared with the conventional video compression encoder, the present key frame encoding method may use the end-to-end image compression network to replace the conventional video encoder, thus improving the encoding efficiency of the key frame. However, the conventional encoding is used for encoding the non-key frame, thereby reducing the coding complexity and takes into account both the advantages of end-to-end image encoding and conventional encoding.

The following description is described in conjunction with the joint scenario of encoding and decoding.

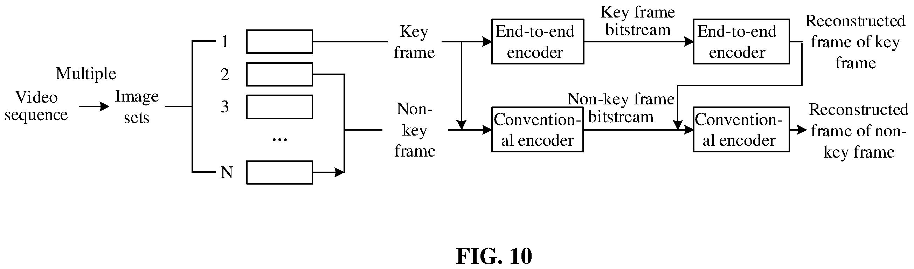

As illustrated in FIG. 10, an encoder end groups a video sequence, determines a plurality of image sets, and determines one or more key frames and one or more non-key frames from each image set. The key frame in the image set pass through an end-to-end compression encoding network (encoding network) to obtain a key frame bitstream. The key frame bitstream is reconstructed through an end-to-end image compression and decoding network to obtain a reconstructed frame of the key frame. The end-to-end image compression and decoding network is not limited to a specific structure, the image end-to-end encoding and decoding network that can reconstruct an input image through encoding and decoding is within the scope. Secondly, the non-key frame in the image set is encoded by the conventional video compression based on the key frame, to obtain the non-key frame bitstream. Finally, after the key frame is reconstructed, the non-key frame bitstream is reconstructed by the conventional video compression and decoding based on the reconstructed frame of the key frame, to obtain a reconstructed frame of the non-key frame.

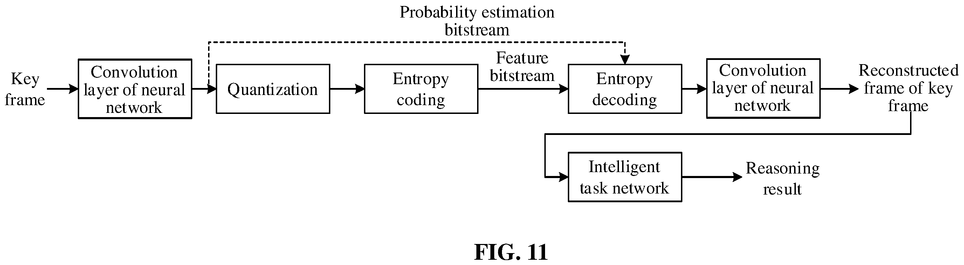

The basic framework of encoding and decoding of the key frame is illustrated in FIG. 11. The key frame is encoded and decoded by the end-to-end compression network to obtain the reconstructed frame of the key frame. The key frame encoded (such as neural network convolution layer processing, quantization, entropy coding, and/or probability estimation) by the end-to-end (intelligent) network will be marked in the bitstream (a feature bitstream, or having a probability estimation bitstream), for example, marked as I* frame (frame type identifier) which is a new mark different from I frame in the conventional coding. The decoder end obtains the frame type identifier of the current frame to be decoded by parsing, and if the frame is the I* frame, the frame is decoded (such as entropy decoding, neural network convolution layer processing) by using the end-to-end compression and decoding network, to obtain a reconstructed frame of the key frame. If the frame type of the frame is not the I* frame, the frame is decoded by using the conventional decoder with reference to the reconstructed frame of the key frame decoded by the end-to-end compression and decoding network. This manner is different from that of the conventional inter prediction for reference I frame in terms of a buffer management and operation mode of the decoded image, a management and operation mode of encoding information buffer space of the decoded image (buffer division, block type (intra-frame or inter-frame), prediction mode, or transformation mode, etc.), and a usage mode of information related to the encoding information buffer space of the decoded image. The decoder end may quickly locate a position of the key frame according to the frame type in the bitstream, and may first decode the key frame bitstream to obtain the reconstructed frame of the key frame. The non-I* frame is decoded based on the reconstructed frame of the key frame as a reference, while the obtained reconstructed frame of the key frame may be directly used for intelligent task reasoning, and a reasoning result (task analysis result) can be obtained without waiting for all bitstreams to complete decoding, thus improving the seed of the task processing.

In an embodiment of the present disclosure, in the encoding process of the key frame and the non-key frame, the following operations are performed.

The encoder end determines the end-to-end compression network parameter based on requirement of a given bit rate (QP), and marks the used end-to-end compression network parameter in the bitstream. The frame type of the frame encoded by using the end-to-end compression network is marked as I* frame in the bitstream. The frame type of the non-key frame is the frame type specified in the conventional video encoder, such as an I frame, P frame, or B frame.

In the decoding process of the key frame and the non-key frame, the following operations are performed.

The decoder end parses the bitstream, obtains the end-to-end compression network parameter, and selects the corresponding end-to-end decoding network for decoding.

The decoder end may quickly locate a position of the key frame according to the fact that the key frame and the non-key frame in the bitstream adopt different identifies of the frame types. The decoder may first decode the key frame bitstream to obtain the reconstructed frame of the key frame. The obtained reconstructed frame of the key frame may be directly used for intelligent task reasoning, instead of performing intelligent task reasoning after completing decoding of all bitstreams. The non-key frame may be decoded with reference to the reconstructed frame of the key frame.

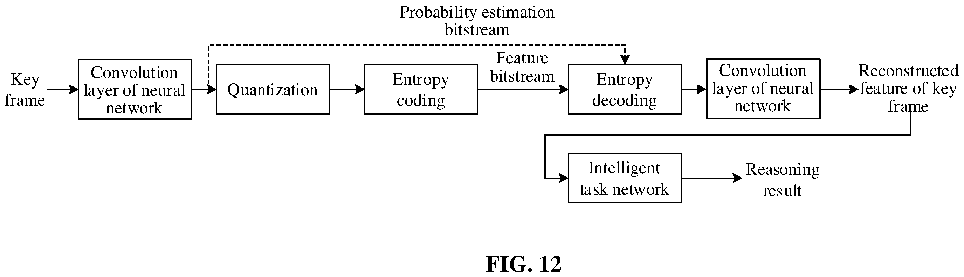

Based on FIG. 11 and as illustrated in FIG. 12, after the decoder obtains the key frame bitstream, the decoder may partially decode the key frame bitstream to obtain a reconstructed key frame feature (which may also be understood as the intermediate output result of the decoding network). That is, the key frame decoder outputs the reconstructed key frame feature, and directly uses the reconstructed key frame feature for intelligent analysis to obtain the reasoning result (task analysis result) without decoding and restoring the key frame image. The intelligent task network does not need to extract the image feature from the reconstructed key frame image. Therefore, the processing procedures can be reduced, the speed of obtaining the analysis result and the analysis accuracy can be improved.

Compared with the conventional video compression encoder, the present disclosure adapts a key frame encoding method which uses the end-to-end image compression network to replace the conventional video encoder, thus improving the encoding efficiency of the key frame. In addition, the decoder end may perform a machine vision reasoning task after decoding part of the bitstream, which can improve the speed and efficiency of task processing.

In view of the aforementioned embodiments, an embodiment of the present disclosure provides a decoder, various included units and modules included in each unit can be realized by a first processor in the decoder. Alternatively, they can also be realized by specific logic circuits. In the process of implementation, the processor may be a Central Processing Unit (CPU), a microprocessor, a Digital Signal Processor (DSP) or a Field Programmable Gate Array (FPGA), etc.

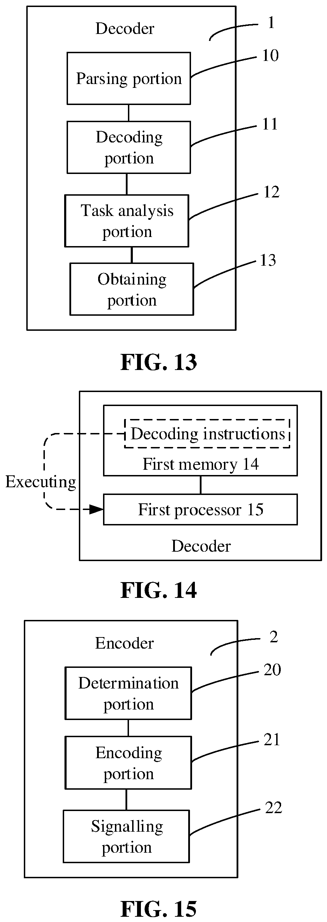

As illustrated in FIG. 13, there is provided a decoder 1 in an embodiment of the present disclosure. The decoder includes a parsing portion 10, a decoding portion 11 and a task analysis portion 12.

The parsing portion is configured to parse a bitstream and obtain a frame type identifier of a frame to be decoded.

The decoding portion is configured to: when the frame type identifier indicates that the frame to be decoded is a key frame, decode the key frame through a decoding network to obtain decoded information.

The task analysis portion is configured to perform task analysis on the decoded information by using a task network, to obtain a task analysis result.

In some embodiments of the disclosure, the decoded information includes a decoded reconstructed frame or a decoded feature intermediately output by the decoding network.

In some embodiments of the disclosure, the decoder 1 further includes an obtaining portion 13.

The parsing portion 11 is further configured to obtain information associated with a network parameter from the bitstream.

The obtaining portion 13 is configured to determine the decoding network based on the information associated with the network parameter.

In some embodiments of the disclosure, the information associated with the network parameter includes index information of the network parameter or the network parameter.

In some embodiments of the present disclosure, the decoding portion 11 is further configured to: after parsing the bitstream and obtaining the frame type identifier of the frame to be decoded, when the frame type identifier indicates that the frame to be decoded is a non-key frame, decode the non-key frame by using conventional decoding to obtain a reconstructed non-key frame.

In some embodiments of the disclosure, the decoder 1 further includes an obtaining portion 13.

The obtaining portion 13 is configured to: after parsing the bitstream and obtaining the frame type identifier of the frame to be decoded, when the frame type identifier indicates that the frame to be decoded is a non-key frame, obtain a reference reconstructed key frame corresponding to the frame to be decoded, and perform inter-frame decoding on the non-key frame based on the reference reconstructed key frame, to obtain a reconstructed non-key frame. The reference reconstructed key frame is a decoded reconstructed frame before decoding the non-key frame.

In some embodiments of the disclosure, the parsing portion 11 is further configured to obtain frame index information of the reference reconstructed key frame from the bitstream.

The obtaining portion 13 is further configured to determine the reference reconstructed key frame from decoded reconstructed frames based on the frame index information.

In practical application, as illustrated in FIG. 14, there is provided a decoder. The decoder includes a first memory 14 and a first processor 15.

The first memory is for storing executable decoding instructions.

The first processor is configured to perform the decoding method of the decoder when executing the executable decoding instructions stored in the first memory 14.

It should be understood that only the key frame is decoded by the end-to-end approach to obtain decoded information in the decoding process. The decoded information may be directly used in the process of performing the intelligent task, and the task analysis function can be realized by adopting the key frame instead of performing the intelligent task after all of the bitstreams are parsed. Therefore, the decoding efficiency of the key frame can be improved while improving the processing speed of intelligent task.

In view of the aforementioned embodiments, an embodiment of the present disclosure provides an encoder, various included units and modules included in each unit can be realized by a second processor in the encoder. Alternatively, they can also be realized by specific logic circuits.

As illustrated in FIG. 15, there is provided an encoder 2 in an embodiment of the present disclosure. The encoder includes a determination portion 20 and an encoding portion 21.

The determination portion is configured to process a video sequence to determine one or more key frames and one or more non-key frames.

The encoding portion is configured to: when a frame to be encoded is a key frame, encode the key frame through an encoding network to obtain a key frame bitstream; and when the frame to be encoded is a non-key frame, perform inter-frame encoding on the non-key frame based on a reference key frame, to obtain a non-key frame bitstream. The reference key frame is an encoded key frame before encoding the non-key frame.

In some embodiments of the disclosure, the encoder 2 further includes a signalling portion 22.

The determination portion 20 is further configured to mark at least one of the key frame or the non-key frame and determine a frame type identifier.

The signalling portion 22 is configured to signal the frame type identifier into at least one of the key frame bitstream or the non-key frame bitstream.

In some embodiments of the disclosure, a value of the frame type identifier is described as a key frame or a non-key frame by a value of a syntax element in at least one of the key frame bitstream or the non-key frame bitstream.

In some embodiments of the present disclosure, the determination portion is further configured to: divide the video sequence into a plurality of sets of image frames. One or more key frames and one or more non-key frames are determined from each of the plurality of sets of image frames.

In some embodiments of the present disclosure, the key frame bitstream includes at least one of a feature bitstream or a probability estimation bitstream.

In some embodiments of the present disclosure, the encoding portion 21 is further configured to: perform feature extraction, quantization and entropy coding on the key frame through the encoding network to obtain the feature bitstream; and perform feature extraction and probability estimation on the key frame through the encoding network to obtain the probability estimation bitstream.

In some embodiments of the present disclosure, the determination portion 20 is further configured to: determine a network parameter of the encoding network based on a preset bit rate, to determine the encoding network.

The signalling portion 22 is further configured to signal the network parameter or index information of the network parameter corresponding to the network parameter into the bitstream.

In some embodiments of the disclosure, the signalling portion 22 is further configured to signal frame index information of the reference key frame into the non-key frame bitstream.

In some embodiments of the present disclosure, the determination portion 20 is further configured to determine, based on a characteristic of task analysis, at least one frame in the video sequence that best matches a task to be a key frame and one or more frames in the video sequence other than the key frame to be the non-key frames.

In some embodiments of the present disclosure, the at least one frame that best matches the task includes: at least one frame in which a task scene is switched; and at least one representative frame in the task scene.

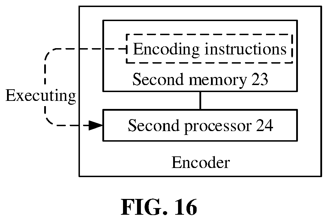

In practical application, as illustrated in FIG. 16, there is provided an encoder. The encoder includes a second memory 23 and a second processor 24.

The second memory is for storing executable encoding instructions.

The second processor is configured to perform the encoding method of the encoder when executing the executable decoding instructions stored in the second memory 23.

It can be understood that the encoder may encode the key frame by using the end-to-end encoding network and encode the non-key frame by using the conventional encoding means. Compared with the conventional video compression encoder, the present key frame encoding method may use the end-to-end image compression network to replace the conventional video encoder, thus improving the encoding efficiency of the key frame. However, the conventional encoding is used for encoding the non-key frame, thereby reducing the coding complexity and takes into account both the advantages of end-to-end image encoding and conventional encoding.

Correspondingly, there is provided a computer-readable storage medium in an embodiment of the present disclosure. The storage medium having stored thereon a computer program which, when being executed by a first processor, causes the first processor to perform the decoding method of the decoder; or when being executed by a second processor, causes the second processor to perform the encoding method of the encoder.

There is provided a computer-readable storage medium in some embodiments of the present disclosure. The computer-readable storage medium has stored thereon executable decoding instructions which, when being executed by a first processor, cause the first processor to perform the decoding method of the decoder; or has stored thereon executable encoding instructions which, when being executed by a second processor, cause the second processor to perform the encoding method of the encoder.

It should be noted that in an embodiment of the disclosure, when the video component prediction method is implemented in form of software functional modules and sold or used as an independent product, the method may be stored in a computer-readable storage medium. Based on such an understanding, the technical solutions of the embodiments of the disclosure essentially, or the part contributing to the related art, may be implemented in the form of a software product. The computer software product is stored in a storage medium, and includes several instructions for instructing an electronic device (which may be a mobile phone, a tablet, a personal computer, a personal digital assistant, a navigation device, a digital phone, a video phone, a television, a sensing device, a server, and the like) to perform all or a part of the method described in the embodiment of the disclosure. The foregoing storage medium includes: any medium that can store program codes, such as a Universal Serial Bus (USB) disk, a removable hard disk, a Read Only Memory (ROM), a magnetic disk, or an optical disk. Therefore, the embodiments of the present disclosure are not limited to any particular combination of hardware and software.

It should be pointed out that the description of the above storage medium and apparatus embodiments is similar to that of the above method embodiments and has the same beneficial effect as the method embodiments. For the detail not disclosed in the storage medium and apparatus embodiments of the present disclosure, reference is made to the method embodiments of the present disclosure for understanding.

The foregoing descriptions are merely implementations of this disclosure, but are not intended to limit the scope of protection of this disclosure. Any variation or replacement readily figured out by a person skilled in the art within the technical scope disclosed in this disclosure shall fall within the scope of protection of this disclosure. Therefore, the scope of protection of this disclosure shall be subject to the scope of protection of the claims.

### Industrial applicability

In the embodiments of the disclosure, in the process of encoding and decoding, the key frame and the non-key frame are distinguished, and the end-to-end encoding and decoding mode is adopted only for the key frame without encoding all frames or parsing all bitstreams. Therefore, the task analysis function can be realized by adopting the key frame in the process of performing the intelligent task. Therefore, the speed of processing the intelligent task can be improved, while improving the encoding and decoding efficiency of key frame.

## Claims

1. A method for decoding, comprising:
parsing a bitstream and obtaining a frame type identifier of a frame to be decoded;
when the frame type identifier indicates that the frame to be decoded is a key frame, decoding the key frame through a decoding network to obtain decoded information; and
performing task analysis on the decoded information by using a task network, to obtain a task analysis result.

2. The method of claim 1, wherein
the decoded information comprises a decoded reconstructed frame or a decoded feature intermediately output by the decoding network.

3. The method of claim 1 or 2, further comprising:
obtaining information associated with a network parameter from the bitstream; and
determining the decoding network based on the information associated with the network parameter.

4. The method of claim 3, wherein
the information associated with the network parameter comprises index information of the network parameter or the network parameter.

5. The method of claim 1, wherein after parsing the bitstream and obtaining the frame type identifier of the frame to be decoded, the method further comprises:
when the frame type identifier indicates that the frame to be decoded is a non-key frame, obtaining a reference reconstructed key frame corresponding to the frame to be decoded, and performing inter prediction on the non-key frame based on the reference reconstructed key frame, to obtain a reconstructed non-key frame, wherein the reference reconstructed key frame is a decoded reconstructed frame before decoding the non-key frame.

6. The method of claim 5, wherein obtaining the reference reconstructed key frame corresponding to the frame to be decoded comprises:
obtaining frame index information of a reference key frame from the bitstream; and
determining the reference reconstructed key frame from decoded reconstructed frames based on the frame index information.

7. The method of claim 1, wherein after parsing the bitstream and obtaining the frame type identifier of the frame to be decoded, the method further comprises:
when the frame type identifier indicates that the frame to be decoded is a non-key frame, decoding the non-key frame by using conventional decoding to obtain a reconstructed non-key frame.

8. A method for encoding, comprising:
processing a video sequence to determine one or more key frames and one or more non-key frames;
when a frame to be encoded is a key frame, encoding the key frame through an encoding network to obtain a key frame bitstream; and
when the frame to be encoded is a non-key frame, performing inter-frame encoding on the non-key frame based on a reference key frame, to obtain a non-key frame bitstream, wherein the reference key frame is an encoded key frame before encoding the non-key frame.

9. The method of claim 8, further comprising:
marking at least one of the key frame or the non-key frame, determining a frame type identifier, and signalling the frame type identifier into at least one of the key frame bitstream or the non-key frame bitstream.

10. The method of claim 9, wherein
a value of the frame type identifier is described as a key frame or a non-key frame by a value of a syntax element in at least one of the key frame bitstream or the non-key frame bitstream.

11. The method of any one of claims 8 to 10, wherein processing the video sequence to determine the one or more key frames and the one or more non-key frames comprises:
dividing the video sequence into a plurality of sets of image frames; and
determining one or more key frames and one or more non-key frames from each of the plurality of sets of image frames.

12. The method of any one of claims 8 to 11, wherein the key frame bitstream comprises at least one of a feature bitstream or a probability estimation bitstream; and
encoding the key frame through the encoding network to obtain the key frame bitstream comprises at least one of:
performing feature extraction, quantization and entropy coding on the key frame through the encoding network to obtain the feature bitstream; or
performing feature extraction and probability estimation on the key frame through the encoding network to obtain the probability estimation bitstream.

13. The method of any one of claims 8 to 12, further comprising:
determining a network parameter of the encoding network based on a preset bit rate, to determine the encoding network; and
signalling the network parameter or index information of the network parameter corresponding to the network parameter into the bitstream.

14. The method of any one of claims 8 to 13, further comprising:
signalling frame index information of the reference key frame into the non-key frame bitstream.

15. The method of any one of claims 8 to 14, wherein processing the video sequence to determine the one or more key frames and the one or more non-key frames comprises:
determining, based on a characteristic of task analysis, at least one frame in the video sequence that best matches a task to be a key frame and one or more frames in the video sequence other than the key frame to be the non-key frames.

16. The method of claim 15, wherein
the at least one frame that best matches the task comprises:
at least one frame in which a task scene is switched; and
at least one representative frame in the task scene.

17. A decoder, comprising:
a parsing portion, configured to parse a bitstream and obtain a frame type identifier of a frame to be decoded;
a decoding portion, configured to: when the frame type identifier indicates that the frame to be decoded is a key frame, decode the key frame through a decoding network to obtain decoded information; and
a task analysis portion, configured to perform task analysis on the decoded information by using a task network, to obtain a task analysis result.

18. A decoder, comprising:
a first memory for storing executable decoding instructions; and
a first processor, configured to perform the method of any one of claims 1 to 7 when executing the executable decoding instructions stored in the first memory.

19. An encoder, comprising:
a determination portion, configured to process a video sequence to determine one or more key frames and one or more non-key frames; and
an encoding portion, configured to: when a frame to be encoded is a key frame, encode the key frame through an encoding network to obtain a key frame bitstream; and when the frame to be encoded is a non-key frame, perform inter-frame encoding on the non-key frame based on a reference key frame, to obtain a non-key frame bitstream, wherein the reference key frame is an encoded key frame before encoding the non-key frame.

20. An encoder, comprising:
a second memory for storing executable encoding instructions; and
a second processor, configured to perform the method of any one of claims 8 to 16 when executing the executable encoding instructions stored in the second memory.

21. A computer-readable storage medium having stored thereon executable decoding instructions which, when being executed by a first processor, cause the first processor to perform the method of any one of claims 1 to 7; or having stored thereon executable encoding instructions which, when being executed by a second processor, cause the second processor to perform the method of any one of claims 8 to 16.
